Europäisches Patentamt

European Patent Office

Office européen des brevets

(11) Veröffentlichungsnummer: **0 278 203**
**A1**

(12) **EUROPÄISCHE PATENTANMELDUNG**

(21) Anmeldenummer: 87810062.7

(22) Anmeldetag: 29.01.87

(51) Int. Cl.⁴: **A61C 13/225**

(43) Veröffentlichungstag der Anmeldung:
**17.08.88 Patentblatt 88/33**

(84) Benannte Vertragsstaaten:
**AT BE CH DE ES FR GB GR IT LI LU NL SE**

(71) Anmelder: **CENDRES ET METAUX S.A.**
**122, route de Boujean**
**CH-2501 Bienne(CH)**

(72) Erfinder: **Wegmueller, Hugo**
**Schwadernauweg 5**
**CH-2504 Biel(CH)**

(74) Vertreter: **Seehof, Michel et al**
**c/o AMMANN PATENTANWAELTE AG BERN**
**Schwarztorstrasse 31**
**CH-3001 Bern(CH)**

(54) **Intrakoronales Geschiebe.**

(57) Das intrakoronales Geschiebe weist eine am
natürlichen Zahn oder Implantat verankerte Matrize
(1) und eine in der Matrize befestigbare, mit dem
Zahnersatzteil verbundene Patrize (2) auf, wobei
diese Geschiebeteile (1, 2) Mittel (10, 11; 28) aufweisen, um das Geschiebe entweder als abnehmbares,
einschnappbares Geschiebe oder als bedingt abnehmbares, verschraubtes Geschiebe zu verwenden.

Bei der Verwendung als schnappbares Geschiebe weist die Matrize (1) im Bereich ihres
Bodens (7) einen Wulst (10) und die Patrize (2) eine
dem Wulst entsprechende Einbuchtung (11) sowie
eine durchgehende Bohrung (18) und einen bodenseitigen Schlitz (17) auf, wobei die Patrize lediglich
durch das Zusammenwirken des Wulstes mit der
Einbuchtung gehalten wird. Bei der Verwendung als
bedingt abnehmbares Geschiebe wird in die durchgehende Bohrung (18) der Patrize eine
Blockierungsschraube eingeschraubt, deren Blockierungsteil mindestens in den Bereich des Wulstes,
bzw. der Einbuchtung reicht.

Bei einem solchen Geschiebe kann der Zahnarzt
jederzeit von einer abnehmbaren einschnappbaren
zu einer bedingt abnehmbaren, verschraubten Patrize bzw. Zahnersatzteil übergehen und umgekehrt.

FIG.1

## Intrakoronales Geschiebe

Die vorliegende Erfindung bezieht sich auf ein intrakoronales Geschiebe, mit einer am natürlichen Zahn oder Implantat verankerten Matrize und einer in der Matrize befestigbaren, mit dem Zahnersatzteil verbundenen Patrize.

Es sind eine grosse Anzahl von Geschieben bekannt, wobei man in der Regel zwischen extrakoronalen Geschieben, worin die Patrize am natürlichen Zahn oder Implantat verankert ist und intrakonoralen Geschieben, worin, wie bei vorliegender Anmeldung, die Matrize am natürlichen Zahn oder Implantat verankert ist unterscheidet. Unter den Geschieben sind sogenannte Schnapp-Geschiebe bekannt, wobei der mit dem Zahnersatzteil verbundene Geschiebeteil einschnappbar im anderen Teil befestigt ist, so dass dieser leicht vom Träger dieses Geschiebes selbst entfernt und wieder eingesetzt werden kann. Es gibt auch Geschiebe, worin die beiden Geschiebeteile miteinander verschraubt sind, so dass der Teil mit dem Zahnersatzteil nur bedingt abnehmbar ist, d.h., nur durch den Zahnarzt, oft nach einem kleinen Eingriff, entfernt werden kann. Dies bedingt aber, dass sich der Zahnarzt vor dem Verankern des Geschiebeteils entscheiden muss, welches Geschiebe, d.h. abnehmbar oder bedingt abnehmbar, er verwenden will, und ausserdem ist es im Falle eines Wechsels der Geschiebeart notwendig, den verankerten Teil auszubauen und einen anderen einzubauen.

Es ist demgegenüber Aufgabe der vorliegenden Erfindung ein intrakoronales Geschiebe anzugeben, mit welchem es möglich ist, sich erst nach dem Verankern der Matrize zu entscheiden, ob ein abnehmbares oder nur bedingt abnehmbares Geschiebe verwendet werden soll und mit welchem es möglich ist, ohne Ausbau der Matrize die Befestigungsart der Patrize mit dem Zahnersatzteil zu wechseln. Ein intrakoronales Geschiebe, welches diese Aufgabe löst, ist in den Patentansprüchen angegeben.

Die Erfindung wird im folgenden anhand einer Zeichnung eines Ausführungsbeispiels näher erläutert.

Figur 1 zeigt ein erfindungsgemässes Geschiebe im Längsschnittt,

Figur 2 zeigt eine Ansicht von rechts in Figur 1 auf die Matrize,

Figur 3 zeigt eine Ansicht von links in Figur 1 auf die Patrize,

Figur 4 zeigt einen Schnitt gemäss der Linie IV/IV in Figur 1,

Figur 5 zeigt eine Blockierschraube,

Figur 6 zeigt eine Abschluss-Schraube, und

Figur 7 zeigt das erfindungsgemässe Geschiebe in eingesetztem Zustand.

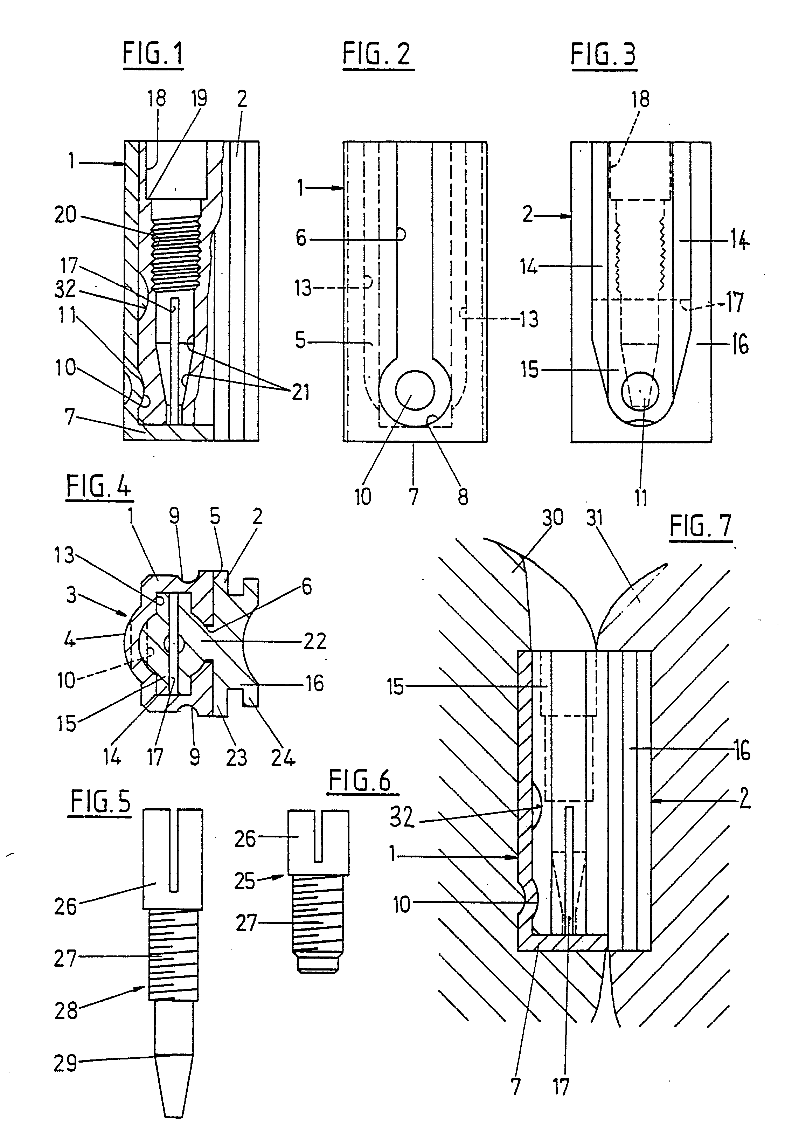

Man erkennt insbesondere in Figur 4 die beiden Teile des Geschiebes, d.h., links eingezeichnet die Matrize 1 und rechts die darin befestig-und verschiebbare Patrize 2. Die Matrize 1 weist im Querschnitt eine etwa rechteckige Aussenform auf, wobei die äussere, dem Zahn oder Implantat zugewandte Breitseite 3 eine zylindrische Ausbuchtung 4 und die gegenüberliegende Breitseite 5 eine von oben bis nahezu zum Boden 7 sich erstreckende Oeffnung 6 enthält, die in vorliegendem Beispiel eine herstellungstechnisch bedingte Verbreiterung 8 aufweist. Die beiden Schmalseiten weisen je eine Nut 9 auf, die der besseren Verankerung dienen. Nahe dem Boden 7 weist die äussere Breitseite 3 in ihrem Innern einen Wulst 10 auf, der mit einer entsprechenden Einbuchtung 11 in der Patrize zusammenarbeitet, um diese abnehmbar zu befestigen.

Die Matrize weist im Innern einen zylindrischen Teil 12 auf, an dem sich parallel zu den Breitseiten je eine rechteckige Ausfräsung 13 anschliesst.

Die Patrize 2 ist in einen Patrizenkörper 15 und ein Retentionsteil 16 zur Befestigung des Zahnersatzteils 31 unterteilt. Der Patrizenkörper ist entsprechend der inneren Form der Matrize, d.h. zylinderförmig geformt und ist mit den rechteckigen Ausfräsungen 13 entsprechenden Rippen 14 versehen. Auf etwa zwei Dritteln ihrer Länge, von oben gesehen, sind die Rippen gleich tief und verjüngen sich nach unten, damit die Patrize besser eingeführt werden kann, siehe Fig. 3. Von unten gesehen ist der Patrizenkörper 15 etwa bis in seine Mitte mit einem Schlitz 17 versehen, wodurch dieses Teilstück federnd ist. Zwecks Erhöhung der Federwirkung ist am Patrizenkörper 15 eine etwa in seiner Mitte querlaufende, konkave Fräsung 32 angebracht. Wie bereits erwähnt, ist der Patrizenkörper an seinem im eingesteckten Zustand unteren Ende mit einer Einbuchtung 11 versehen. Ferner weist der Patrizenkörper 15, siehe Figur 1, eine durchgehende Bohrung 18 auf, die gemäss Figur 1 oben einen grösseren Durchmesser hat und einen Absatz 19 aufweist, dann anschliessend auf einer gewissen Länge mit einem Gewinde 20 versehen ist und schliesslich in ein glattes Stück 21 übergeht, das sich nach unten hin verjüngt. Anschliessend an den Patrizenkörper 15 und über einen Steg 22, der entsprechend der länglichen Oeffnung 6 geformt ist, verbunden, befindet sich das Retentionsteil 16, das zwei Flügelpaare 23 und 24 aufweist, wobei die der Matrize zugewandte Seite des ersten Flügelpaares 23 entsprechend der inneren Breitseite der Matrize geformt ist. Wie bei solchen Geschieben üblich, sind die beiden Geschiebeteile sehr genau gearbeitet, so dass sie gegeneinander nur minimales Spiel aufweisen.

Erfindungswesentlich ist nun, dass die Patrize entweder nur einschnappbar und somit leicht abnehmbar in der Matrize befestigt ist oder nur bedingt abnehmbar mit dieser verschraubt ist. Falls die Patrize mit dem Zahnersatzteil abnehmbar in der Matrize befestigbar respektive einschnappbar sein soll, würde die Ausführung gemäss Figur 1, d.h. ohne Schraube bereits genügen, doch um zu verhindern, dass Speisereste in die Bohrung 18 gelangen ist es zweckmässig, eine Abschluss-Schraube 25 zu verwenden, wie sie in Figur 6 dargestellt ist. Diese Abschluss-Schraube weist einen im oberen Bohrungsteil versenkbaren Kopf 26 sowie ein zum Gewinde 20 passendes Gewinde 27 auf, wobei sie im Bereich des Gewindes aufhört, d.h. sie beeinflusst nicht die Schnappfunktion des Wulstes 10 und der Einbuchtung 11.

Falls nun das Geschiebe nur bedingt abnehmbar sein soll, d.h. nur durch den Zahnarzt, wird die Blockierschraube 28 gemäss Figur 5 verwendet, die zusätzlich zum Kopf 26 und Gewinde 27 ein dem glatten Stück 21 entsprechendes Blockierungsteil 29 aufweist, das im eingeschraubten Zustand verhindert, dass das untere Teil der Patrize mit der Einbuchtung 11 nachgibt und somit die Patrize abgenommen werden kann.

In Figur 7 ist links das eingebaute Geschiebe gezeigt, wobei der Fall eines abnehmbaren, eingeschnappten Zahnersatzteil dargestellt ist und somit der Raum über dem Patrizenkörper 15 frei ist, da das Zahnersatzteil gedacht ist, öfters entfernt zu werden. Man erkennt links eingezeichnet das Teil 30 des natürlichen Zahnes oder Implantates, in welches die Matrize verankert ist, und rechts das Zahnersatzteil 31, welches um das Retentionsteil 16 der Patrize befestigt ist.

Als Material für das Geschiebe kann eine angiessbare Legierung verwendet werden, beispielsweise das von der Anmelderin bereits für solche Teile verwendete Ceramicor® oder beispielsweise eine Platin-Iridiumlegierung mit einem Anteil von über 10% Iridium. Ausserdem ist es möglich, die Matrize durch Umgiessen eines sogenannten Platzhalters aus thermoschockbeständigem Material zu formen, woraufhin der Platzhalter aus dem Guss chemisch oder mechanisch entfernt wird.

## Ansprüche

1. Intrakoronales Geschiebe, mit einer am natürlichen Zahn oder Implantat verankerten Matrize (1) und einer in der Matrize befestigbaren, mit dem Zahnersatzteil (31) verbundenen Patrize (2), dadurch gekennzeichnet, dass diese Geschiebeteile (1, 2) Mittel (10, 11; 28) aufweisen, um das Geschiebe entweder als abnehmbares, einschnappbares Geschiebe oder als bedingt abnehmbares, verschraubtes Geschiebe zu verwenden.

2. Intrakoronales, einschnappbares Geschiebe nach Anspruch 1, dadurch gekennzeichnet, dass die Matrize (1) im Bereich ihres Bodens (7) einen Wulst (10) und die Patrize (2) eine dem Wulst entsprechende Einbuchtung (11) sowie eine durchgehende Bohrung (18) und einen bodenseitigen Schlitz (17) aufweist.

3. Geschiebe nach Anspruch 2, dadurch gekennzeichnet, dass die obere Oeffnung der Bohrung (18) mit einer Verschluss-Schraube (25) abgedichtet ist.

4. Intrakoronales, bedingt abnehmbares Geschiebe nach Anspruch 1, dadurch gekennzeichnet, dass die Matrize (1) im Bereich ihres Bodens (7) einen Wulst (10) und die Patrize (2) eine dem Wulst entsprechende Einbuchtung (11) sowie eine durchgehende Bohrung (18) und einen bodenseitigen Schlitz (17) aufweist, und dass zwecks Blockierung der Patrize in deren durchgehenden Bohrung (18) eine Blockierschraube (28) eingeschraubt ist, deren Blockierungsteil (29) mindestens bis in den Bereich des Wulstes (10) bzw. der Einbuchtung (11) reicht.

5. Geschiebe nach einem der Ansprüche 1 bis 4, dadurch gekennzeichnet, dass die Patrize (2) einen Patrizenkörper (15) und ein Retentionsteil (16) für das Zahnersatzteil (31) aufweist und der Retentionskörper (15) eine im wesentlichen zylindrische Aussenform etwa in seiner Mitte eine quer verlaufende, konkave Fräsung (32) zwecks Erhöhung der Federwirkung vom Schlitz (17) und zwei Rippen (14) aufweist und der entsprechenden Innenform (12) mit Ausfräsungen (13) in der Matrize (1) angepasst ist.

6. Geschiebe nach Anspruch 5, dadurch gekennzeichnet, dass sich die Rippen (14) in ihrem unteren Drittel zum Boden hin verjüngen.

7. Geschiebe nach einem der Ansprüche 1 bis 6, dadurch gekennzeichnet, dass die Matrize eine im Querschnitt etwa rechteckige Aussenform aufweist, wobei die äussere, dem Zahn oder Implantat (30) zugewandte Breitseite (3) eine zylindrische Ausbuchtung (4) und die gegenüberliegende Breitseite (5) eine längliche Oeffnung (6) aufweist.

8. Geschiebe nach einem der Ansprüche 1 bis 7, dadurch gekennzeichnet, dass das Retentionsteil (16) der Patrize (2) zwei Flügelpaare (24, 25) aufweist, wobei die der Matrize zugewandte Seite des ersten Flügelpaares (23) entsprechend der inneren Breitseite (5) der Matrize geformt ist.

9. Geschiebe nach einem der Ansprüche 1 bis 8, dadurch gekennzeichnet, dass die Geschiebeteile (1, 2) aus einer angiessbaren Legierung hergestellt sind.

10. Geschiebe nach Anspruch 9, dadurch gekennzeichnet, dass die angiessbare Legierung eine Platin-Iridium-Legierung mit einem Iridiumanteil grösser als 10% ist.

0 278 203

FIG.1     FIG.2     FIG.3

FIG.4

FIG.5     FIG.6     FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 301 182 (MICRODENT-ATTACHMENT GmbH) * Seite 17, Zeilen 1-23; Figur 1 * | 1-4,6-8 | A 61 C  13/225 |
| A | * Seite 8, Zeilen 4-24; Figur 1 * | 9,10 | |
| Y | US-A-3 117 377  (M.D. POVEROMO) * Spalte 3, Zeilen 55-65; Figuren 2,3 * | 1-4,6-8 | |
| A | WO-A-7 900 847  (P. BREITINGER) * Seite 4, Zeilen 5-15; Figur 1 * | 5,6 | |

RECHERCHIERTE SACHGEBIETE (Int. Cl.4)

A 61 C

Der vorliegende Recherchenbericht wurde für alle Patentansprüche erstellt.

| Recherchenort DEN HAAG | Abschlußdatum der Recherche 04-07-1987 | Prüfer EHRSAM F.J.A. |
|---|---|---|